(19) Europäisches Patentamt
European Patent Office
Office européen des brevets

(11) **EP 3 999 790 B1**

(12) **EUROPEAN PATENT SPECIFICATION**

(45) Date of publication and mention
of the grant of the patent:
**04.09.2024 Bulletin 2024/36**

(51) International Patent Classification (IPC):
**F24S 70/225** (2018.01)  **F28F 13/18** (2006.01)
**F24S 23/00** (2018.01)  **F24S 70/60** (2018.01)
**F24S 80/00** (2018.01)  **F28D 15/02** (2006.01)
**F28D 15/06** (2006.01)  **F28D 20/02** (2006.01)
**F28D 20/00** (2006.01)  **F28F 13/00** (2006.01)

(21) Application number: **20840779.1**

(22) Date of filing: **15.07.2020**

(52) Cooperative Patent Classification (CPC):
**F28D 15/0266; F24S 23/00; F24S 70/225;**
**F24S 70/60; F28D 15/0275;** F24S 2070/62;
F24S 2080/07; F28D 15/06; F28D 20/02;
F28D 20/028; F28D 2020/0013; F28F 2013/008;
F28F 2245/06

(86) International application number:
**PCT/NZ2020/050067**

(87) International publication number:
**WO 2021/010842 (21.01.2021 Gazette 2021/03)**

(54) **A HEAT TRANSFER APPARATUS**

WÄRMEÜBERTRAGUNGSVORRICHTUNG

APPAREIL DE TRANSFERT DE CHALEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.07.2019 NZ 19755519**

(43) Date of publication of application:
**25.05.2022 Bulletin 2022/21**

(73) Proprietor: **Dorrington, Adrian Andrew**
**Greenhithe, Auckland 0632 (NZ)**

(72) Inventor: **Dorrington, Adrian Andrew**
**Greenhithe, Auckland 0632 (NZ)**

(74) Representative: **London IP Ltd**
**100 High street**
**Milford on Sea**
**Lymington, Hampshire SO41 0QE (GB)**

(56) References cited:
EP-A1- 2 071 253  CN-U- 203 116 350
US-A- 4 427 123  US-A- 4 427 123
US-A- 4 461 277  US-A- 4 941 302

US-A- 4 941 302  US-A1- 2016 363 394
US-A1- 2016 363 394

• RUIZ, FRANCISCO: "What is Perpetual Motion?",
WEB ARCHIVE, Chicago, US, XP009533815,
Retrieved from the Internet
<URL:https://web.archive.org/web/20160608113
452/https://mypages.iit.edu/~ruiz/perpetual.html
> [retrieved on 20220223]
• K M BROWNE: "Focused radiation, the second
law of thermodynamics and temperature
measurements", J. PHYS. D: APPL. PHYS., vol.
26, 1993, pages 16, XP000335776, DOI:
10.1088/0022-3727/26/1/004
• THEODORE J. YODER ET AL.: "Resolution of the
ellipsoid paradox in thermodynamics",
AMERICAN JOURNAL OF PHYSICS, vol. 79, no.
8, 2011, pages 811 - 818, XP055789815
• ANONYMOUS: "The Perpetual Pursuit of
Perpetual Motion", PR GOMEZ, 30 May 2016
(2016-05-30), pages 1 - 18, XP055789816,
Retrieved from the Internet
<URL:https://prgomez.com/the-perpetual-pursui
t-of-perpetual-motion> [retrieved on 20200817]

Remarks:
The file contains technical information submitted after the application was filed and not included in this specification

Remarks:
The file contains technical information submitted after the application was filed and not included in this specification

## Description

### Field of the Invention

This invention relates to a heat transfer apparatus, and in particular thermal energy transfer and management systems. More specifically, in particular embodiments the invention may be used to implement improved heat pump systems.

### Background of the Invention

All objects are constantly releasing heat to their nearby environment and at the same time gaining heat released from nearby objects. When they release heat they cool down, and when they gain heat they heat up. The hotter objects are, the more heat they release.

Generally we observe hotter objects passing heat to cooler objects because objects that are hotter than their immediate surroundings release more heat than they gain. Likewise, objects that are cooler than their surroundings heat up because they are gaining more heat than they are releasing.

We also generally observe that objects that are at the same temperature as their surroundings remain at that temperature, because the amount of heat they are gaining is balanced by the amount of heat they are releasing, resulting in no net change in heat.

For example, a building in a cold environment which has its inside heated to a comfortable temperature is constantly losing heat to the outside. Hence, to keep the inside temperature stable, some form of heater is used to balance the heat lost by the building. In a building in a hot environment which is cooled to a comfortable temperature, is constantly gaining heat from outside. Again, to maintain a constant inside temperature, some sort of cooling device is used to balance the heat absorbed. US-A-4461277 discloses a heat transfer apparatus for heating and cooling building structures.

There are many situations where we wish to stop or reduce the transmission of heat from hotter objects to colder objects. For example, insulation installed in building walls, floors, and ceilings to lessen the heating or cooling required to maintain a stable temperature.

Indeed, it is often desirable to move heat from cooler objects to hotter objects, in contrary to the generally accepted natural heat transfer direction. Such devices are generally called heat pumps. For the building in a hot environment example, a heat pump can be used to move heat from inside to outside, to counteract the natural heat transfer from outside to inside. A refrigerator is another example of using a heat pump to move heat from inside the refrigerator to outside the refrigerator.

Existing heat pump systems are ubiquitous and effective, but have the disadvantages of requiring an energy source, such as electricity; being of sufficient mechanical complexity to have a limited operation life span and require maintenance, servicing and repair; and have a history of requiring environmentally hazardous compounds.

It is therefore preferable and valuable to have a heat transfer apparatus for a system of thermal management that minimises ongoing energy consumption, or at least provided an alternative over the prior art. Furthermore, it is preferable and valuable to have a heat transfer apparatus for a system of thermal management that does not require significant amounts of maintenance and has minimal impact on the environment.

### Disclosure of the Invention

According to one aspect of the present invention there is provided a heat transfer apparatus which includes

a transmitter object which defines an external collection surface and an internal transmission surface,
a receiver object displaced from the transmitter object, the receiver object defining an internal receiving surface and an external heat delivery surface,
a thermal conduit which incorporates at least one side wall connected between the transmitter object and receiver object, said at least one side wall spanning the distance between the transmitter object and receiver object and enclosing a volume between the transmitter and receiver objects, said at least one side wall enclosing the internal transmission surface of the transmitter object and the internal receiving surface of the receiver object,
wherein the transmitter object, receiver object and thermal conduit are configured to promote heat transfer in predominantly one direction.

According to another aspect of the present invention there is provided a heat transfer apparatus which includes

a transmitter object which defines an external collection surface and an internal transmission surface,
a receiver object displaced from the transmitter object, the receiver object defining an internal receiving surface and an external heat delivery surface,
a thermal conduit which incorporates at least one side wall connected between the transmitter object and receiver object, said at least one side wall spanning the distance between the transmitter object and receiver object and enclosing a volume between the transmitter and receiver objects, said at least one side wall enclosing the internal transmission surface of the transmitter object and the internal receiving surface of the receiver object,
wherein the transmitter object, receiver object and thermal conduit are configured to promote heat transfer predominantly towards the receiver object.

According to another aspect of the present invention there is provided a heat transfer apparatus substantially as described above wherein an interior surface of a thermal conduit side wall includes one or more thermal reflectors formed from nanostructure metamaterials adapted to preferentially reflect thermal radiation in specific directions, a nanostructure, nanolayer, or metamaterial is applied to the internal transmission surface of the transmitter object, and/or internal receiving surface of the receiver object to preferentially emit thermal radiation in specific wavelength bands, the area of the internal transmission surface of the transmitter object is larger than the area of the internal receiving surface of the receiver object, and the volume enclosed by the thermal conduit includes a filter adapted to reflect thermal radiation in specific wavelength bands and transmit thermal radiation in other wavelength bands.

In the first aspect the present invention is adapted to provide a heat transfer apparatus, and in a further aspect the present invention provides a heat transfer assembly formed from two or more of such apparatuses.

Through the action of the invention heat transfer may be promoted to transfer heat predominantly in one direction, and preferably towards a receiver object. In various embodiments of the invention may be configured to promote heat transfers predominantly from a transmitter object towards a receiver object, and in a range of embodiments may utilise configurations where heat transfers emitted by the receiver object can be reflected back towards the receiver object. Those skilled in the art will appreciate that heat flows may still occur from the receiver object to the transmitter object, while the invention promotes the net or greater flow of heat to transfer from the transmitter object to the receiver object.

Reference throughout this specification has also been made to various components, objects, or surfaces of the invention being transmitters or receivers of heat. However those skilled in the art will appreciate that these references relate to the overall result of considering both heat transmission and heat reception by the same article. In particular, an element described in accordance with the invention as a heat transmitter may receive heat at a lower rate than it transmits heat. Conversely, a heat receiver will transmit heat at a lower rate than it receives heat.

In various embodiments the external collection surface of the transmitter object is utilised to primarily collect heat from the immediate environment of the heat transfer apparatus. In yet other embodiments the external heat collection surface may be utilised to collect heat from an enclosed or contained space, such as in applications where the invention is used to provide a cooling effect to this enclosed space. In yet further embodiments this external heat collection surface may be used to collect heat from the receiver object of a further heat transfer apparatus as provided by the invention.

Reference in general will be made throughout this specification to the heat transfer apparatus provided being used to transfer heat to an enclosed space. In such embodiments the receiver object may be located within or in thermal communication with the enclosed space and the external collection surface of the transmitter object may be used collect heat from the immediate environment of the apparatus outside of this enclosed space. Those skilled in the art will however appreciate that the invention may be used in other configurations and may, for example, cool an enclosed space when a transmitter object is located within or in thermal communication with this enclosed space.

Those skilled in the art will also recognise that thermal communication can also include the use of intermediary thermal transfer mechanisms, such as for example, heat exchangers, heat transfer fluids and heat pipes.

In a preferred embodiment the external surface of the transmitter object may be utilised to collect heat from the immediate environment of the heat transfer apparatus.

In a further preferred embodiment the external surface of the transmitter object may be adapted to primarily collect heat from the immediate environment of the heat transfer apparatus. For example in some embodiments this external surface may incorporate, be formed by, include or have applied a nanostructure metamaterial which is tuned to absorb sunlight - to heat the transmitter object - and impede blackbody radiation from the surface. Specific details of the form and construction of a candidate metamaterial surface which can perform such a role are described by way of example only in Materials journal 2018 vol. 11 page 862: A review of tunable wavelength selectivity of meta-materials in the field and far field radiative thermal transport by Yanpei Tian, Alok Ghanekar, Matt Ricci , Mikhail Hyde , Otto Gregory and Yi Zheng.

Preferably the external heat delivery surface of the receiver object is utilised to primarily deliver heat to the immediate environment of the heat transfer apparatus. As indicated above in various embodiments this immediate environment may be an enclosed space which is to be heated, or an open area which is to receive heat from an enclosed space cooled by the presence of the invention's transmitter object.

In some embodiments the external heat delivery surface of the receiver object may be adapted to deliver heat to an open area which is also exposed to sunlight, and where the transmitter object is used to remove heat from an adjacent enclosed space. For example in some embodiments this external heat delivery surface may incorporate, be formed by or have applied a nanostructure metamaterial which is tuned to block the absorption of sunlight and promote the emission of blackbody radiation. Specific details of the form and construction of candidate metamaterial surfaces which can perform such a role are described by way of example only in the following publications:

• Scalable-manufactured randomized glass-polymer hybrid metamaterial for daytime radiative cooling by Yao Zhai, Yaoguang, Sabrina N. David, Dongliang Zhao, Runnan Lou, Gang Tan, Ronggui Yang, Xiaobo Yin, Science 10 Mar 2017: Vol. 355, Issue 6329, pp. 1062-1066, DOI: 10.1126/science.aai7899.

• Passive radiative cooling below ambient air temperature under direct sunlight by Aaswath P. Raman, Marc Abou Anoma, Linxiao Zhu, Eden Rephaeli & Shanhui Fan, Nature volume 515, pages540-544(2014).

Preferably the internal transmission surface of the transmitter object is utilised to emit black body thermal radiation.

Preferably the internal receiving surface of the receiver object is utilised to absorb the thermal radiation emitted from the internal transmission surface of the transmitter object.

In various embodiments the internal transmission surface of the transmitter object, and/or internal receiving surface of the receiver object are adapted to preferentially emit thermal radiation in specific wavelength bands.

Preferably a nanostructure, nanolayer, or metamaterial may be applied to the internal transmission surface of the transmitter object, and/or internal receiving surface of the receiver object to preferentially emit thermal radiation in specific wavelength bands.

In further preferred embodiments a nanostructure, nanolayer, or metamaterial used in such embodiments may be formed from any material which exhibits the characteristic of emitting black body radiation with a spectral density or content differing from most naturally occurring materials as predicted by Planck's law.

Preferably a heat transfer apparatus may include a filter within the volume enclosed by the thermal conduit.

Preferably the filter being adapted to reflect thermal radiation in specific wavelength bands and transmit thermal radiation in other wavelength bands. This filter may preferably be configured to assist in the promotion of heat transfer from the transmitter to the receiver objects when either of the internal surfaces of these objects are adapted to emit thermal radiation in specific wavelength bands.

Preferably the filter may be formed from of a wavelength depended reflector provided by a dichromatic mirror, thin film interference filter, and/or nanostructure metamaterial.

Preferably the internal environment of the volume enclosed by the thermal conduit promotes radiative heat exchange and discourages other methods of heat exchange.

In various embodiments the volume enclosed by the side wall or walls of the thermal conduit may be a low-air pressure, partial vacuum or vacuum environment.

In yet other embodiments the volume enclosed by the side wall or walls of the thermal conduit may contain an inert or low thermal conductivity gas, such as for example, Xenon, Argon, Krypton and/or Nitrous Oxide gases. Those skilled in the art will appreciate that either the absence of a gas from the volume defined by the thermal conduit, or the presence of a low thermal conductivity gas in this volume will perform effectively to promote radiative heat exchange and discourage other methods of heat exchange.

In some embodiments the area of the internal transmission surface of the transmitter object may be larger than the area of the internal receiving surface of the receiver object.

In some embodiments an interior surface of a thermal conduit side wall may include one or more thermal reflectors arranged to direct thermal radiation preferentially to the receiver object.

Preferably the at least one thermal reflector or reflectors may include a nanostructure metamaterial adapted to preferentially reflect thermal radiation in specific directions.

In further preferred embodiments a nanostructure metamaterial used as a thermal reflector may be formed from any material which exhibits the following characteristics over the wavelength range containing the majority of the energy of the black body radiation emitted by the transmission surface of the transmitter object:

• high reflectivity;
• low absorption;
• can focus, diffract, or otherwise direct light predominantly in specific directions;

In various preferred embodiments the apparatus may also include at least one thermal buffer material adapted to allow the transfer of heat in a first control state and to discourage the transfer of heat in a second control state. In further preferred embodiments the thermal buffer material utilised by the invention may have control states that correspond to particular temperature values or temperature ranges. In various embodiments it may be desirable to limit the heat transfer effects facilitated by the invention. A buffer material or materials as referenced above may be utilised by the invention to check for the existence or breach of certain control conditions and to act to disable or reduce heat transfers made by the invention. For example in some embodiments a buffer material may be used to disable the operation of the invention or to attenuate the heat transfer affect provided by the invention.

In some embodiments a thermal buffer material may be provided in contact with the external collection surface of the transmitter object.

In some embodiments a thermal buffer material may be provided in contact with the external heat delivery surface of the receiver object.

In some embodiments a thermal buffer material may be provided in contact with the internal transmission surface of the transmitter object.

In some embodiments a thermal buffer material may be provided in contact with the internal receiving surface of the receiver object.

In some embodiments a thermal buffer material may be provided in contact with the internal side wall surface of the thermal conduit.

In some embodiments a thermal buffer material may be provided by or in association with a filter. In such embodiments the filter may be configurable to exhibit an abrupt change in properties which have an impact on heat transfers enabled by the invention when exposed to a specific control stimulus. For example in one potential embodiment a combined filter and thermal buffer material may be provided by an electronically controlled variable refractor.

Those skilled in the art will appreciate that a buffer material may be placed in contact with any one or combination of the above referenced surfaces provided by the invention in various embodiments.

Preferably a thermal buffer material utilised in conjunction with the present invention experiences an abrupt change in any one or more of the following properties when exposed to a specific control stimulus:

- thermal conductivity;
- emissivity;
- reflectivity.

These properties therefore allow the thermal buffer material to be used to modify the behaviour or performance of the invention based on the specific control stimulus which the buffer material is exposed to. Those skilled in the art will appreciate that the acceptable abruptness of the change in such properties may be determined by the application which the present invention is used.

Those skilled in the art will also appreciate that the form and characteristics of a specific control stimulus will vary depending on the particular type of buffer material used in conjunction with the present invention. In various embodiments a specific control stimulus may include one or more of:

- a thermal stimulus;
- an electronic stimulus;
- a mechanical stimulus;
- a magnetic stimulus;
- an optical stimulus.

For example, in some embodiments a thermal stimulus may relate to specific temperature ranges which result in an abrupt change in the relevant characteristics of the buffer material used. Such a buffer material may facilitate heat transfers when exposed to a thermal stimulus consisting of a first range of temperature values, and may impede thermal transfers when exposed to a second range of temperature values.

Similarly other forms of buffer materials may exhibit abrupt changes in the relevant characteristics employed by the invention when exposed to specific values of electrical voltage or current, applied forces of various magnitudes or vibrations of selected frequencies, magnetic fields of particular strength and/or directions, or when exposed to light with specific frequency bands.

In further preferred embodiments a thermal buffer material may be formed by a phase change material, being a material which exhibits a marked or significant change in its thermal conduction properties between its various material phases. For example, in some embodiments a thermal buffer material may exhibit high thermal conductivity as a solid, and low thermal conductivity as a liquid.

In various embodiments a thermal buffer material may be formed by a material that abruptly changes thermal conduction properties at a transition temperature. Such materials can therefore transition between phases over a small temperature range.

In additional embodiments a thermal buffer material may be formed by a material that abruptly changes emissivity or reflection properties at a transition temperature.

In various embodiments a thermal buffer material used in in accordance with the invention may be formed from any material which exhibits the following characteristics:

- a high thermal conductivity, emissivity, or reflectivity state in response to a specific control stimulus or condition;
- a low thermal conductivity, emissivity, or reflectivity state in response to another specific control stimulus or condition;
- a rapid transition from high to low, or low to high, states in response to a changing stimulus;

where the stimulus or conditions may be associated with specific temperature ranges or external control signals, such as electronic or mechanical events.

Preferably a thermal buffer material may be configured to have one or more control states that correspond to at least one of a thermal, electronic, mechanical, magnetic, or optical stimulus generated by an external control system. Those skilled in the art will appreciate that the specific thermal buffer material used in conjunction with the present invention may be selected based on the form of stimulus or condition which is to be used to change the properties of this material. Exemplary classes of such materials and the associated stimulus or conditions which change the properties of interest to the present invention are described by way of example in the following publications:

- Qiyang Lu, Samuel Huberman, Hantao Zhang, Qichen Song, Jiayue Wang, Gulin Vardar, Adrian Hunt, Iradwikanari Waluyo, Gang Chen & Bilge Yildi, "Bidirectional tuning of thermal transport in SrCoOx with electrochemically induced phase transitions", Nature Materials 19, pages655-662(2020).

- Geoff Wehmeyer, Tomohide Yabuki, Christian Monachon, Junqiao Wu, and Chris Dames, "Thermal diodes, regulators, and switches: Physical mechanisms and potential applications", Applied Physics Reviews 4, 041304 (2017); doi 10.1063/1.5001072
- Albert Massaguer Colomer, Eduard Massaguer, Toni Pujol, Marti Comamala, Lino Montoro, J.R. González , "Electrically tunable thermal conductivity in thermoelectric materials: Active and passive control", Applied Energy Volume 154, 15 September 2015, Pages 709-717
- Kaikai Du, Qiang Li, Yanbiao Lyu, Jichao Ding, Yue Lu, Zhiyuan Cheng and Min Qiu, "Control over emissivity of zero-static-power thermal emitters based on phase changing material GST", Light: Science & Applications, Volume 6, page e16194 (2017)

According to a further aspect of the invention there is provided a heat transfer assembly formed from at least two heat transfer apparatuses substantially as described above.

According to another aspect of the invention there is provided a heat transfer assembly which includes a receiver object of a first transfer apparatus engaged with, or in thermal communication with, a transmitter object of a second transfer apparatus.

According to a yet further aspect of the invention there is provided a heat transfer assembly formed from at least two heat transfer apparatuses, each transfer apparatus incorporating a common transmitter object which defines separate external collection and internal transmission surfaces for each transfer apparatus, each transfer apparatus incorporating a common receiver object which defines separate internal receiving and external heat delivery surfaces for each transfer apparatus.

Those skilled in the art will appreciate that in further aspects of the invention a plurality of the heat transfer apparatuses discussed above may be combined together to form a heat transfer assembly. This approach can be used to amplify the performance of that of a single heat transfer apparatus provided an isolation, and also to provide additional flexibility in terms of the geometry apparatus assembly provided in various applications. This assembly may be formed through the direct physical connection - or potentially by the sharing of - the components of each adjacent apparatus, or indirectly by means of an intermediate thermal communication component located between the adjacent apparatus. Those skilled in the art will appreciate that a variety of existing heat communication or heat exchange technologies may be used in this role in conjunction with the present invention.

The present invention may provide many potential advantages over the prior art or at least an alternative choice the prior art as discussed in further detail below.

Those skilled in the art will appreciate that an important mechanism for the release of heat, or gaining of heat, by an object is the emission, or absorption, of thermal radiation. The amount of thermal radiation emitted by an object increases with its temperature and with its surface area.

Two objects at the same temperature interacting by thermal radiation normally observe zero net heat transfer because each is absorbing the same amount of heat that it is emitting to the other, and their effective surface area of interaction are the same. This is called thermal equilibrium.

However, it is an aspect of the present invention that thermal equilibrium can be achieved between two objects with different temperatures if a larger surface area of the cooler object can be efficiently coupled to a smaller surface area of a hotter object. That is, the increase in thermal radiation emission due to the larger surface area of the cooler object balances the increase in thermal emission due to the hotter temperature of the hotter object, thereby achieving zero net heat transfer.

Under the same larger to smaller surface area coupling arrangement, if the two objects are initially at the same temperature, heat will flow from the larger surface to the smaller surface, where the larger surface gets cooler and the smaller surface gets hotter, until equilibrium is achieved, with the surfaces stabilising at different temperatures.

Consequently, heat can be moved from a cooler object with a larger surface area to a hotter object with a smaller surface area. If additional thermal energy is supplied to the cooler surface, for example, by way of conduction from a thermal reservoir, and thermal energy removed from the hot surface, for example, to another thermal reservoir, continual heat flow can be achieved, within the limits of the reservoirs. We can refer to a device that does this as a Thermal Syphon.

Returning to the building in a cold environment example, the cooler thermal reservoir is the outside environment, including the ground or earth, and the hotter thermal reservoir is the inside of the building. Using a Thermal Syphon, heat can be moved from the outside cooler environment to the inside hotter environment with little or no expenditure of energy.

Conceptually, a thermally reflective area reducing structure, such as a funnel or truncated cone or pyramid, can be used as a thermal conduit to couple the larger and smaller surface areas, and thereby act as a thermal concentrating conduit. However, the internal surface of the structure should exhibit electromagnetic reflective properties that preferably reflect energy towards the smaller area.

The ability of metasurfaces and metamaterials to control and direct light and other electromagnetic waves in ways that are not possible with traditional refractive and reflective optics is well known. Example, the following publication provides an example of the use of such metasurfaces and metamaterials - Dragomir Neshev & Igor Aharonovich, "Optical metasurfaces: new generation building blocks for multifunctional optics", Light: Science & Applications 7, Article number: 58 (2018). Therefore, metasurfaces and metamaterials are example candidates for the preferential reflective surface material for the internal surfaces of the reflective structure.

In addition, it is known that metasurfaces and metamaterials can also be used to preferentially emit thermal radiation in specific spectral bands. For example, the following publication provides an example description of materials which may be used on this application - Yanpei Tian, Alok Ghanekar, Matt Ricci, Mikhail Hyde, Otto Gregory and Yi Zheng, "A Review of Tunable Wavelength Selectivity of Metamaterials in Near-Field and Far-Field Radiative Thermal Transport", Materials 2018, 11, 862; doi:10.3390/ma11050862.

Therefore, another method of achieving or enhancing preferential thermal transfer from one surface to another is by shifting the wavelength of the black body radiation for one or more surfaces and employing wavelength selective elements to direct the thermal radiation in preferential directions.

In accordance with various aspects of the present invention, apparatuses are provided for efficient thermal management, whereby thermal radiation is coupled from a comparatively large surface area of a cooler object to a comparatively smaller surface area of a hotter object, thereby arranging the system such that:

a. the hotter object absorbs more thermal radiation than it emits, and therefore gets hotter, and
b. the colder object emits more thermal radiation than it absorbs, and therefore gets colder.

Accordingly, it is an object of the present invention to provide at least one, and potentially a plurality of thermal transfer apparatuses for transferring heat from a colder object to a hotter object. It is a further object of the present invention where the thermal transfer apparatuses required little or no ongoing energy consumption, little or no requirement for ongoing maintenance, and are more environmentally sustainable than previous solutions.

**Brief description of the drawings**

Additional and further aspects of the present invention will be apparent to the reader from the following description of embodiments, given in by way of example only, with reference to the accompanying drawings in which:

- FIG 1 is an orthographic projection diagram of a heat transfer apparatus provided in accordance with one embodiment of the invention;
- FIG 2a, 2b, 2c provides cross-section diagrams of several versions of a heat transfer apparatus provided in accordance with various additional embodiments of the invention;
- FIG 3a, 3b provides side view diagrams of two versions of a heat transfer assembly provided by stacked heat transfer apparatuses to improve overall performance in accordance with additional aspects and embodiments of the invention;
- FIG 4a, 4b provide side view diagrams of two heat transfer apparatuses including a thermal buffer in accordance with various additional embodiments of the present invention;
- FIG 5 is a side view diagram of a heat transfer apparatus including a thermal control unit in accordance with an additional embodiment of the invention;
- FIG 6a, 6b provides side view diagrams of arrays of heat transfer apparatus forming an assembly in accordance with further embodiments of the invention;
- FIG 7a, 7b provides orthographic projections of two different types of arrays of heat transfer apparatus forming an assembly in accordance with additional embodiments of the invention;
- F IG 8a, 8b provides orthographic projections of stacked arrays of heat transfer apparatus forming an assembly in accordance with additional embodiments of the invention;
- FIG 9 is a side view of a flexible array of apparatuses providing a flexible heat transfer assembly in accordance with another embodiment of the invention;

Further aspects of the invention will become apparent from the following description of the invention which is given by way of example only of particular embodiments.

**Best modes for carrying out the invention**

Heat is transferred through one of four mechanisms: conduction, convection, advection, and radiation. Considering only heat transfer between stationary objects, thereby precluding advection, placed in a vacuum, thereby precluding convection, and well thermally insulated, thereby with negligible conduction, leaves radiation as the only significant heat transfer mechanism. From herein we will consider this to be the case.

All objects emit black body thermal radiation. The power (in Watts) of this emission is related to temperature and surface area by the Stefan-Boltzmann law:

$$P = \epsilon \sigma A T^4$$

where $\varepsilon$ is the surface emissivity, $\sigma$ is the Stefan-Boltzmann constant ($5.670373 \times 10^{-8}$ Wm$^{-2}$K$^{-4}$), $A$ is the object's surface area, and $T$ is the object's surface temperature in Kelvin.

As an object emits thermal radiation, it loses internal energy and its temperature reduces. All objects that emit thermal radiation are also capable of absorbing thermal radiation. When an object absorbs thermal radiation its internal energy, and consequently its temperature increases.

The amount of black body thermal radiation transfer from an emitting surface to a collecting surface is a function of the temperature and area of the emitting surface, the solid angle subtended by the collecting surface, and the emissivities of the surfaces. It is normally assumed that the emissivities are fixed for a given material, and the effective surface areas of objects interacting through thermal radiation are fixed for a given physical arrangement.

Therefore, to be in thermal equilibrium, the objects must be at the same temperature. This assumption holds when introducing traditional refractive and reflective optics as any magnification of surface area necessitates an inverse magnification of solid angle subtended, resulting in no net change in energy transfer.

Generally, heat will transfer from hotter objects to colder objects, as the hotter object emits more thermal radiation than it absorbs from the colder object, resulting in a net emission of heat, cooling it down. The cooler object absorbs more thermal radiation from the hotter object than it emits, resulting in a net absorption of thermal energy, and therefore it heats up.

Objects at a stable temperature, that is, are not heating up or cooling down, are said to be in thermal equilibrium. Thermal equilibrium is defined as the situation where there is no net flow of thermal heat energy between objects, when they are connected by a path permeable to heat. Even in thermal equilibrium, all objects are still emitting black body radiation and absorbing radiation emitted from other objects, but are absorbing and emitting at exactly the same rate, resulting in zero net heat flow.

Objects in thermal equilibrium are normally assumed to be at the same temperature because it is normal for the effective surface area of interaction for each object to be the same. However, in accordance with the present invention, thermal equilibrium can be also achieved between two objects of different temperatures under the assumption that a larger surface area of the cooler object can be efficiently coupled to a smaller surface area of a hotter object. From herein we refer to such an apparatus that can achieve thermal equilibrium between objects as differing temperatures as a Thermal Syphon.

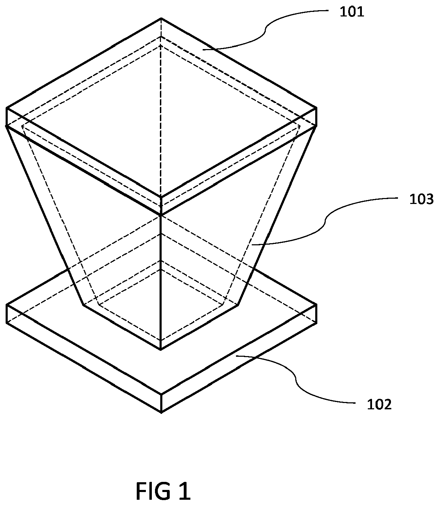

FIG 1 shows a schematic orthographic projection of a preferred embodiment of a heat transfer apparatus, referred to interchangeably throughout the specification as a 'Thermal Syphon' apparatus. This apparatus is configured to preferentially allow the flow of thermal radiation from a transmitter object (101) to a receiver object (102) by concentrating the black body radiation from a larger surface area of the transmitter object onto a smaller surface area of the receiver object. The thermal concentration is achieved by a thermal conduit (103). The transmitter and receiver objects are depicted as flat plates, but other shapes may be beneficial in specific applications. The thermal conduit is depicted as a truncated square pyramid, but other shapes, including but not limited to, a truncated cone or extruded trapezoid, may be beneficial.

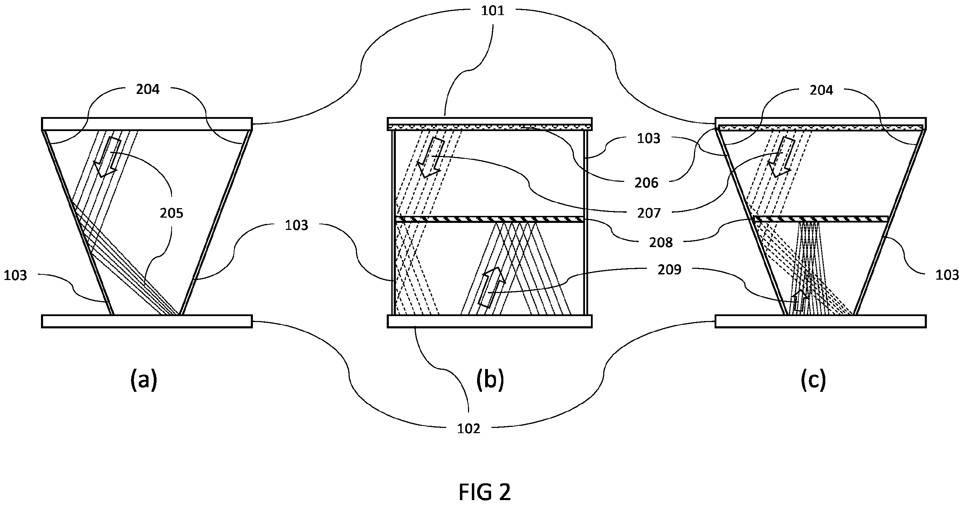

FIG 2a shows a schematic cross-section view of the Thermal Syphon apparatus of FIG 1 in more detail. The thermal conduit (103) is comprised of reflecting surfaces (204) adapted to reflect energy preferentially towards the receiver object (102). The apparatus may be sealed and evacuated, or near evacuated, or filled with a gas, to limit conduction and convection heat transfer, thereby improving performance.

Ray traced light rays (205) illustrate an example preferential reflection of thermal radiation, wherein the reflecting surfaces (204) are substantially physically flat but adapted to focus light and act in a way equivalent to one half of an idealised concave mirror. However, reflecting surfaces with other properties will also be effective. Furthermore, for the purposes of this invention, high quality imaging optics are not required, meaning that the apparatus is tolerant to reflecting surfaces with minor errors or distortions, and thereby may be fabricated with cheaper manufacturing processes.

FIG 2b shows a schematic cross-section view of another embodiment of a Thermal Syphon apparatus configured to use wavelength selective elements. This system is configured to preferentially allow flow of thermal radiation from the transmitter object (101) to the receiver object (102) by configuring the transmission surface (206) of the transmitter object to emit radiation at a shifted wavelength (207), for example, through the use of metasurface coatings, and selectively passing those wavelengths with a wavelength selective element (208) such as a dichroic mirror or filter. Radiation emitted (209) from the receiver object will be unshifted in wavelength and reflected back to the same object by the wavelength selective element. The wavelength selective element may be placed in different positions between the transmitter and receiver objects, and that it may be beneficial to also use wavelength shifting metasurfaces on the receiver object surface.

FIG 2c shows a schematic of a combination of the apparatuses from FIG 2a and FIG 2b to improve efficiency or performance of both.

By definition, thermal equilibrium between the transmitter object and the receiver object is achieved when there is zero net flow of thermal heat energy between objects. That is, the amount of thermal energy emitted by the transmitter object and absorbed by the receiver object is equal to the amount of thermal energy emitted by the receiver object and absorbed by the transmitter object. When the surface area of the transmitter object is larger than the surface area of the receiver object, and thermal radiation is effectively coupled between them, for thermal equilibrium, the transmitter object must be at a lower temperature than the receiver object.

In the case of a wavelength selective element placed between the objects, the refection or partial reflection of thermal radiation as an equivalent change in surface area of the surfaces. For example, if 80% of the power of the thermal radiation emitted by a surface is reflected back to that surface, the effective surface area can be considered to also be reduced by 80%, and thereby be mathematically treated as 20% of its actual size.

For radiative thermal equilibrium, power emitted by the transmitter object and absorbed by the receiver, equals power emitted by the receiver object and absorbed by the transmitter:

$$P_1 = P_2$$

$$\epsilon_1 \sigma A_1 T_1^4 = \epsilon_2 \sigma A_2 T_2^4$$

where variables with subscript 1 relate to the transmitter object and variables with subscript 2 relate to the receiver object.

For simplicity, we shall assume that both objects have substantially the same emissivity, allowing simplification to:

$$A_1 T_1^4 = A_2 T_2^4$$

$$T_2^4 = \frac{A_1}{A_2} T_1^4$$

In practice, the reflecting surfaces of the concentrator will have limitations on their ability of the preferential energy refection towards the receiver object, making the equilibrium power transfer as:

$$P_2 + P_1(1 - \eta_c) = P_1 \eta_c$$

$$P_2 = P_1(2\eta_c - 1)$$

where $\eta_c$ is the fraction of power emitted by the transmitter object that is absorbed by the receiver object. Here we assume the remining power is directed back to, and absorbed by, the transmitter object. For simplicity, we shall define a "coupling ratio" as:

$$\eta = 2\eta_c - 1$$

The equilibrium temperature ratio can then be calculated as:

$$P_2 = P_1 \eta$$

$$T_2^4 = \frac{A_1}{A_2} \eta T_1^4$$

$$\frac{T_2}{T_1} = \sqrt[4]{\frac{A_1}{A_2} \eta}$$

This equilibrium temperature also represents the operations maximum temperature values for which a single Thermal Syphon apparatus will act as a Thermal Syphon.

The above equations assume all of the thermal energy emitted by the receiver object will be absorbed by the transmitter object. However, this may not be the case in practice, but herein, for clarity and simplicity, it is assumed that this effect is not material. Should it be material in reality, it will only improve the performance of the system. Those skilled in the art will also recognise that further adaptation of the invention to intentionally limit the transfer of thermal energy from the receiver object to the transmitter object will also improve the overall performance of the apparatus.

The rate of thermal energy transferred (in Watts) is the difference in thermal power transferred between the object taking into consideration the coupling ratio:

$$\Delta P = P_1 \eta - P_2 = \epsilon_1 \sigma A_1 T_1^4 \eta - \epsilon_2 \sigma A_2 T_2^4$$

Again, assuming the emissivities of both objects are substantially the same, thermal power transferred is:

$$\Delta P = \epsilon \sigma (A_1 T_1^4 \eta - A_2 T_2^4)$$

or, in terms of a ratio of object surface areas:

$$\Delta P = \epsilon \sigma A_2 \left(\frac{A_1}{A_2} \eta T_1^4 - T_2^4\right)$$

If the cooler side temperature and desired power transfer are known, the hotter side temperature can be calculated as:

$$T_2 = \sqrt[4]{\frac{A_1}{A_2} \eta T_1^4 - \frac{\Delta P}{\epsilon \sigma A_2}}$$

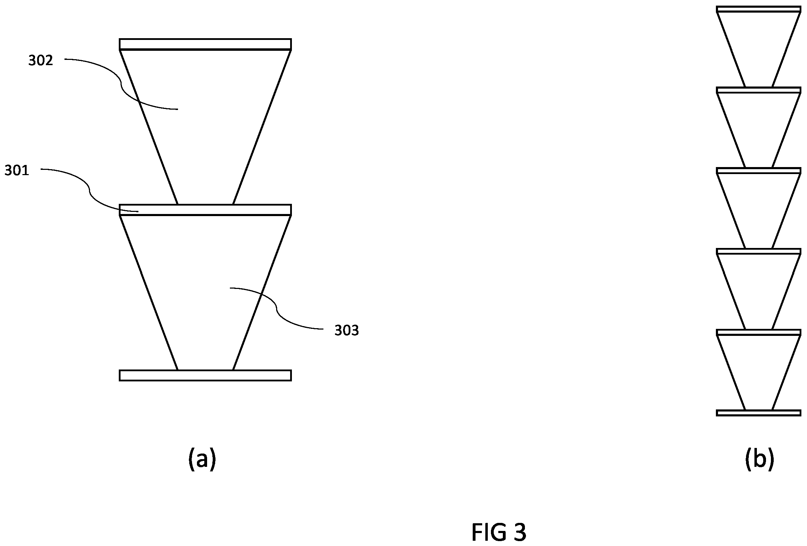

FIG 3a, 3b shows schematic side views of multiple thermal transfer apparatuses stacked together to form an assembly. FIG 3a shows how the hotter receiver object (301) of a first apparatus (302) also forms, or is in thermal contact with, the cooler transmitter object of a second apparatus (304), increasing the maximum operating temperature. The overall relationship between temperatures and power transferred can now be expressed as the combination of two independent units:

$$T_2 = \sqrt[4]{\frac{A_1}{A_2}\eta\left(\frac{A_1}{A_2}\eta T_1^4 - \frac{\Delta P}{\epsilon\sigma A_2}\right) - \frac{\Delta P}{\epsilon\sigma A_2}}$$

and simplified to:

$$T_2 = \sqrt[4]{\left(\frac{A_1}{A_2}\eta\right)^2 T_1^4 - \frac{\Delta P}{\epsilon\sigma A_2}\left(\frac{A_1}{A_2}\eta + 1\right)}$$

There is no limit, beyond the obvious such as temperature limits of the component materials, on the number of apparatuses that may be stacked to achieve an even greater maximum operating temperature range, either hot or cold, including cryogenic, or greater power transfer at a given temperature difference, as shown in FIG 3b. The relationship between temperatures and power transferred can be expressed more generally as:

$$T_2 = \sqrt[4]{\left(\frac{A_1}{A_2}\eta\right)^n T_1^4 - \frac{\Delta P}{\epsilon\sigma A_2}\sum_{i=0}^{n-1}\left(\frac{A_1}{A_2}\eta\right)^i}$$

where n is the number of layered apparatuses in the stack. Hence, the heat transfer for a stacked system can be calculated as:

$$\Delta P = \frac{\epsilon\sigma A_2}{\sum_{i=0}^{n-1}\left(\frac{A_1}{A_2}\eta\right)^i}\left[\left(\frac{A_1}{A_2}\eta\right)^n T_1^4 - T_2^4\right]$$

Those skilled in the art will also recognise that different surface areas or configurations could be used for each layer of apparatus.

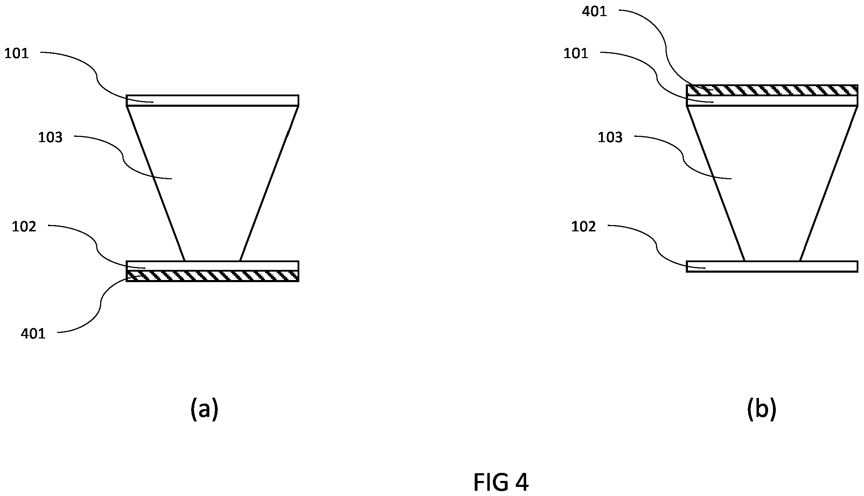

FIG 4 shows schematic side views illustrating further embodiments of the apparatus adapted to limit the heating or cooling temperature, whereby a thermal buffer material (401) is added to the hotter side of the Thermal Syphon apparatus, as shown by FIG 4a, or the cooler side of the apparatus, as shown by FIG 4b.

The thermal buffer material is adapted to have a transition temperature at a desired temperature limit and undergo a significant change in thermal conductivity around the transition temperature, thereby limiting heating or cooling temperature range of the apparatus. It is well known that some materials exhibit rapid change in thermal conductivity when undergoing a phase change, such as solid to liquid or vice-versa, and therefore such materials would be good candidates for the thermal buffer. It is also well known that some materials exhibit a change in emissivity or reflectivity when undergoing a phase change. Such materials could be used as a thermal buffer material on the internal surfaces of the apparatus. Further example candidates for a thermal buffer material are thermal components such as thermal diodes, regulators and switches, and tuneable or controllable thermal conductors.

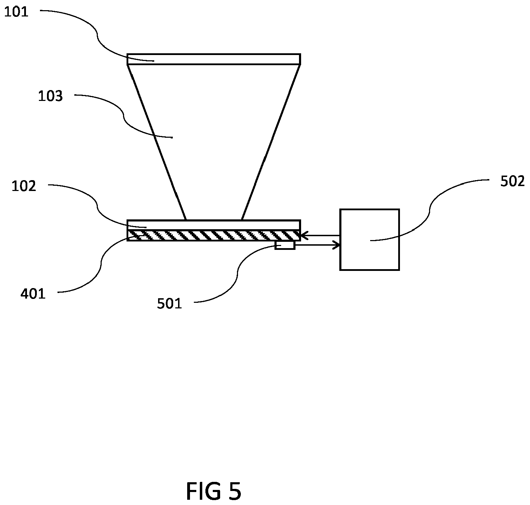

FIG 5 shows schematic side views illustrating further preferred embodiments of the apparatus adapted to dynamically control the heating or cooling limit of the apparatus by including a temperature sensor (501) and a controller (502) to selectively control the thermal buffer material's thermal conductivity in accordance with a temperature control algorithm. The same temperature control approach could be applied to the cooler side of the apparatus, or the thermal buffer material placed on the internal surfaces of the apparatus.

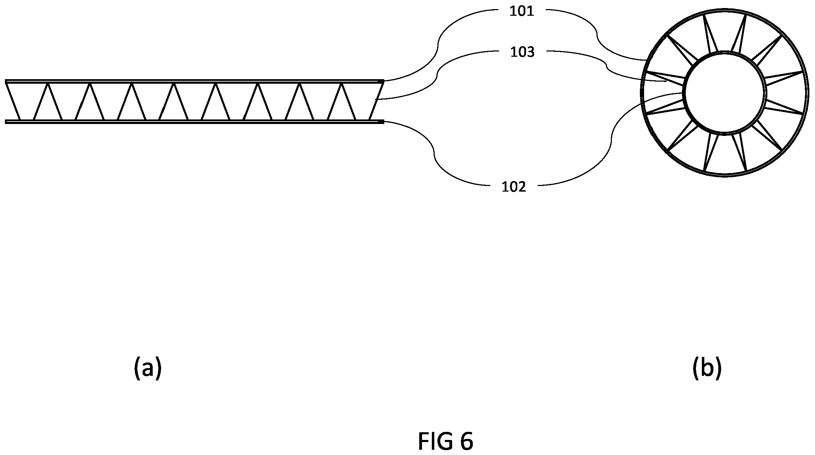

FIG 6a, 6b show schematic side views illustrating examples of multiple apparatuses arranged together as two different assemblies which form a larger or enclosed group which define a strip in the case of FIG 6a, or in the case of FIG 6b, a ring. Other similar arrangements include, swapping orientation of the individual Thermal Syphons to reverse the heat transfer direction, and the use of other structure shapes that may be more appropriate for specific applications.

Multiple apparatuses may be arranged in other geometries or shapes as appropriate for specific applications, for example:

- multi-sided regular or irregular polygons, and especially interlocking polygons such as hexagons, allowing multiple groups of apparatuses to be in thermal contact with one another;
- curved profiles, wherein multiple apparatuses are arranged to form or approximate circles, ellipses, or other smooth shapes, wherein the surfaces of the individual apparatuses may also be curved;
- arbitrary shapes that are adapted to specific applications, including forming a covering, coating, or surface adapted to follow the form of another object from which thermal energy may need to be supplied or removed; and
- all of the shapes are profiles described above in three dimensions.

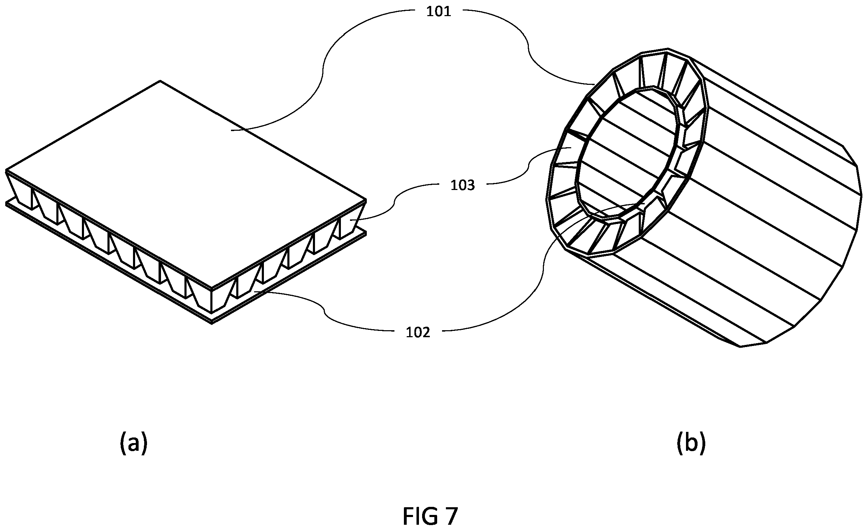

FIG 7a, 7b show schematic orthographic projection equivalents of the side views provided by FIG 3a, 3b, illustrating how individual Thermal Syphon apparatuses can be formed into shapes such as panels, tiles, tubes or pipes. Those skilled in the art will also recognise how these shapes could then be combined to create even more complex shapes, such as 6 panels forming a cuboid, enclosing or semi-enclosing a zone of heating or cooling, the tube enclosed at the ends to form an enclosed or semi-enclosed cylinder for heating or cooling, or individual apparatuses arranged to form an enclosed or semi-enclosed sphere.

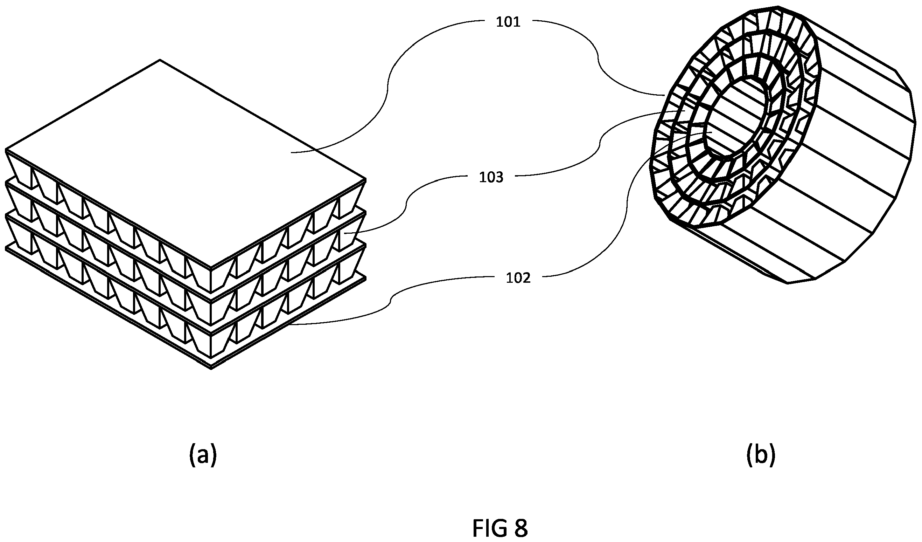

FIG 8a, 8b show schematic orthographic projections of the multiple arrays of FIG 7 arranged in layers or stacks, as demonstrated in FIG 3, to enhance the performance of the Thermal Syphon. Three layers are shown for clarity, but other numbers of layers could also be used.

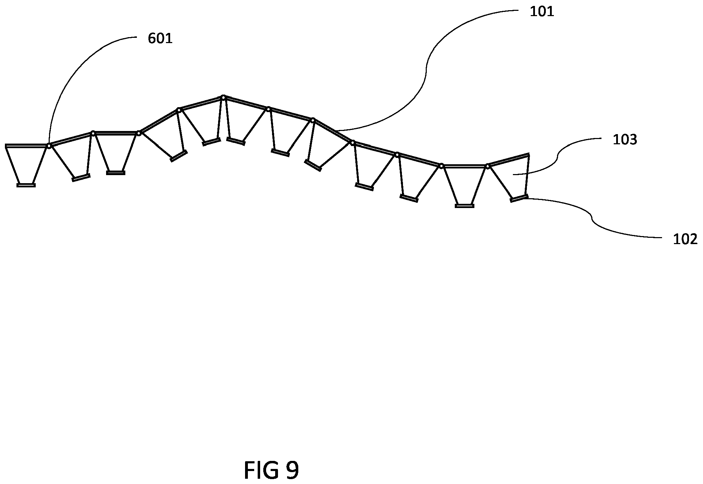

FIG 9 is a schematic side view showing how multiple individual apparatuses could be connected via a hinge or flexible joint mechanism (601) to form a flexible or semi-flexible sheet. Other forms of flexible material could also be constructed, for example, by embedding multiple small-scale apparatuses in fabric.

Those skilled in the art will also recognise that the various combinations of apparatuses, as shown in layers and stacks of FIG 3, FIG 6, FIG 7, FIG 8, FIG 9, and any other combinations, could also include the use of thermal buffer materials and thermal control units as shown in FIG 4 and FIG 5.

The Thermal Syphons and arrays of Thermal Syphons disclosed herein, could be used for applications including, but not limited to:

- heating and cooling of buildings by incorporating the tiles into flooring, walls, or ceiling, or by incorporating the pipes into fluid based heating or cooling systems such as radiators and underfloor heating, and including buildings in remote locations, such as Antarctica, the Moon, and Mars;
- creating cool boxes, that not only remain cool, but can actively cool items, for applications such as food or medical supply storage and transport;
- bottles that actively heat or cool their contents;
- water heating systems;
- cryogenic coolers and cryogenic carbon capture, recovery and sequestering systems;
- thermoelectric electricity generation;
- blankets, and emergency blankets, that can provide active heating.

In the preceding description and the following claims the word "comprise" or equivalent variations thereof is used in an inclusive sense to specify the presence of the stated feature or features. This term does not preclude the presence or addition of further features in various embodiments.

It is to be understood that the present invention is not limited to the embodiments described herein and further and additional embodiments within the scope of the invention will be apparent to the skilled reader and may be made without departure of the scope of the invention as defined in the appended claims.

**Claims**

1. A heat transfer apparatus which includes

   a transmitter object which defines an external collection surface and an internal transmission surface,
   a receiver object displaced from the transmitter object, the receiver object defining an internal receiving surface and an external heat delivery surface,
   a thermal conduit which incorporates at least one side wall connected between the transmitter object and receiver object, said at least one side wall spanning the distance between the transmitter object and receiver object and enclosing a volume between the transmitter and receiver objects, said at least one side wall enclosing the internal transmission surface of the transmitter object and the internal receiving surface of the receiver object,
   wherein an interior surface of a thermal conduit side wall includes one or more thermal reflectors arranged to direct thermal radiation preferentially to the receiver object and the transmitter object, receiver object and thermal conduit are configured to promote heat transfer predominantly towards the receiver object.

2. A heat transfer apparatus as claimed in claim 1 wherein the volume enclosed by the side wall or walls of the thermal conduit is a low-air pressure, partial vacuum or vacuum environment.

3. A heat transfer apparatus as claimed in claim 1 wherein the volume enclosed by the side wall or walls of the thermal conduit contains an inert or low thermal conductivity gas.

4. A heat transfer apparatus as claimed in claim 1 wherein the at least one thermal reflector or reflectors include a nanostructure metamaterial adapted to preferentially reflect thermal radiation in specific directions.

5. A heat transfer apparatus as claimed in claim 1 wherein the external collection surface of the transmitter object is utilised to collect heat from the immediate environment of the heat transfer apparatus and the external collection surface of the transmitter object includes or has applied a nanostructure metamaterial which is tuned to absorb sunlight and impede blackbody radiation from the external collection surface.

6. A heat transfer apparatus as claimed in claim 1 wherein the external heat delivery surface of the receiver object is utilised to deliver heat to the immediate environment of the heat transfer apparatus and the external heat delivery surface of the receiver object includes or has applied a nanostructure metamaterial which is tuned to block the absorption of sunlight and promote the emission of blackbody radiation.

7. A heat transfer apparatus as claimed in claim 1 wherein the internal transmission surface of the transmitter object is utilised to emit black body thermal radiation and a nanostructure, nanolayer, or metamaterial is applied to the internal transmission surface of the transmitter object to preferentially emit thermal radiation in specific wavelength bands.

8. A heat transfer apparatus as claimed in claim 1 wherein the internal receiving surface of the receiver object is utilised to absorb the thermal radiation emitted from the internal transmission surface of the transmitter object.

9. A heat transfer apparatus as claimed in claim 8 wherein a nanostructure, nanolayer, or metamaterial is applied to the internal receiving surface of the receiver object to preferentially emit thermal radiation in specific wavelength bands.

10. A heat transfer apparatus as claimed in claim 1 wherein a heat transfer apparatus includes a filter within the volume enclosed by the thermal conduit, the filter being adapted to reflect thermal radiation in specific wavelength bands and transmit thermal radiation in other wavelength bands.

11. A heat transfer apparatus as claimed in claim 10 wherein the filter is formed from of a wavelength depended reflector provided by a dichromatic mirror, thin film interference filter, and/or nanostructure metamaterial.

12. A heat transfer apparatus as claimed in claim 1 wherein the area of the internal transmission surface of the transmitter object is larger than the area of the internal receiving surface of the receiver object.

13. A heat transfer apparatus as claimed in claim 1 or claim 10 wherein a thermal buffer material is provided in contact with or as part of any one or more of:

   • the external collection surface of the transmitter object;
   • the external heat delivery surface of the receiver object;
   • the internal transmission surface of the transmitter object;
   • the internal receiving surface of the receiver object;
   • the internal side wall surface of the thermal conduit;
   • the filter.

14. A heat transfer assembly formed from at least two heat transfer apparatuses as claimed in claim 1 which includes a receiver object of a first transfer apparatus engaged with, or in thermal communication with, a transmitter object of a second transfer apparatus.

15. A heat transfer assembly formed from at least two heat transfer apparatuses as claimed in claim 1 each transfer apparatus incorporating a common transmitter object which defines separate external collection and internal transmission surfaces for each transfer apparatus, each transfer apparatus incorporating a common receiver object which defines separate internal receiving and external heat delivery surfaces for each transfer apparatus.

**Patentansprüche**

1. Wärmeübertragungsvorrichtung, die Folgendes aufweist

   ein Ausstrahlerobjekt, das eine äußere Sammelfläche und eine innere Ausstrahlfläche definiert,
   ein Empfängerobjekt, das von dem Ausstrahlerobjekt entfernt ist, wobei das Empfängerobjekt eine innere Empfangsfläche und eine äußere Wärmeabgabefläche definiert,
   eine Wärmeleitung, die mindestens eine Seitenwand enthält, die zwischen dem Ausstrahlerobjekt und dem Empfängerobjekt verbunden ist, wobei die mindestens eine Seitenwand den Abstand zwischen dem Ausstrahlerobjekt und dem Empfängerobjekt überspannt und ein Volumen zwischen dem Ausstrahler- und Empfängerobjekt umschließt, wobei die mindestens eine Seitenwand die innere Ausstrahlfläche des Ausstrahlerobjekts und die innere Empfangsfläche des Empfängerobjekts umschließt,
   wobei eine Innenfläche einer Wärmeleitungsseitenwand einen oder mehrere Wärmereflektoren aufweist, die angeordnet sind, um Wärmestrahlung vorzugsweise auf das Empfängerobjekt und das Ausstrahlerobjekt zu richten, wobei das Empfängerobjekt und die Wärmeleitung konfiguriert sind, die Wärmeübertragung hauptsächlich auf das Empfängerobjekt zu fördern.

2. Wärmeübertragungsvorrichtung nach Anspruch 1, wobei das von der Seitenwand oder den Seitenwänden der Wärmeleitung umschlossene Volumen eine Umgebung mit niedrigem Luftdruck, Teilvakuum oder Vakuum ist.

3. Wärmeübertragungsvorrichtung nach Anspruch 1, wobei das von der Seitenwand oder den Seitenwänden der Wärmeleitung umschlossene Volumen ein inertes Gas oder Gas mit niedriger Wärmeleitfähigkeit enthält.

4. Wärmeübertragungsvorrichtung nach Anspruch 1, wobei der mindestens eine Wärmereflektor oder die Wärmereflektoren ein nanostrukturiertes Metamaterial aufweisen, das dazu ausgelegt ist, Wärmestrahlung bevorzugt in bestimmte Richtungen zu reflektieren.

5. Wärmeübertragungsvorrichtung nach Anspruch 1, wobei die äußere Sammelfläche des Ausstrahlerobjekts verwendet wird, um Wärme aus der unmittelbaren Umgebung der Wärmeübertragungsvorrichtung zu sammeln, und die äußere Sammelfläche des Ausstrahlerobjekts ein nanostrukturiertes Metamaterial aufweist oder dieses darauf aufgetragen ist, das darauf abgestimmt ist, Sonnenlicht zu absorbieren und Schwarzkörperstrahlung von der äußeren Sammelfläche zu behindern.

6. Wärmeübertragungsvorrichtung nach Anspruch 1, wobei die äußere Wärmeabgabefläche des Empfängerobjekts verwendet wird, um Wärme an die unmittelbare Umgebung der Wärmeübertragungsvorrichtung abzugeben, und die äußere Wärmeabgabefläche des Empfängerobjekts ein nanostrukturiertes Metamaterial aufweist oder dieses darauf aufgetragen ist, das abgestimmt ist, um die Absorption von Sonnenlicht zu blockieren und die Emission von Schwarzkörperstrahlung zu fördern.

7. Wärmeübertragungsvorrichtung nach Anspruch 1, wobei die innere Ausstrahlfläche des Ausstrahlerobjekts verwendet wird, um Wärmestrahlung eines schwarzen Körpers zu emittieren, und eine Nanostruktur, eine Nanoschicht oder ein Metamaterial auf die innere Ausstrahlfläche des Ausstrahlerobjekts aufgetragen ist, um Wärmestrahlung in bestimmten Wellenlängenbändern bevorzugt zu emittieren.

8. Wärmeübertragungsvorrichtung nach Anspruch 1, wobei die innere Empfangsfläche des Empfängerobjekts verwendet wird, um die von der inneren Ausstrahlfläche des Ausstrahlerobjekts emittierte Wärmestrahlung zu absorbieren.

9. Wärmeübertragungsvorrichtung nach Anspruch 8, wobei eine Nanostruktur, eine Nanoschicht oder ein Metamaterial auf die innere Empfangsfläche des Empfängerobjekts aufgetragen ist, um Wärmestrahlung in bestimmten Wellenlängenbändern bevorzugt zu emittieren.

10. Wärmeübertragungsvorrichtung nach Anspruch 1, wobei eine Wärmeübertragungsvorrichtung ein Filter innerhalb des von der Wärmeleitung umschlossenen Volumens aufweist, wobei das Filter angepasst ist, um Wärmestrahlung in bestimmten Wellenlängenbändern zu reflektieren und Wärmestrahlung in anderen Wellenlängenbändern zu übertragen.

11. Wärmeübertragungsvorrichtung nach Anspruch 10, wobei das Filter aus einem wellenlängenabhängigen Reflektor gebildet ist, der durch einen dichromatischen Spiegel, ein Dünnschicht-Interferenzfilter und/oder ein nanostrukturiertes Metamaterial bereitgestellt ist.

12. Wärmeübertragungsvorrichtung nach Anspruch 1, wobei die Fläche der inneren Ausstrahlfläche des Ausstrahlerobjekts größer als die Fläche der inneren Empfangsfläche des Empfängerobjekts ist.

13. Wärmeübertragungsvorrichtung nach Anspruch 1 oder Anspruch 10, wobei ein Wärmepuffermaterial in Kontakt mit oder als Teil von einem oder mehreren der Folgenden bereitgestellt ist:

   • der äußeren Sammelfläche des Ausstrahlerobjekts;
   • der äußeren Wärmeabgabefläche des Empfängerobjekts;
   • der inneren Ausstrahlfläche des Ausstrahlerobjekts;
   • der inneren Empfangsfläche des Empfängerobjekts;
   • der inneren Seitenwandfläche der Wärmeleitung;
   • dem Filter.

14. Wärmeübertragungsanordnung, die aus mindestens zwei Wärmeübertragungsvorrichtungen nach Anspruch 1 gebildet ist, die ein Empfängerobjekt einer ersten Übertragungsvorrichtung aufweist, das mit einem Ausstrahlerobjekt einer zweiten Übertragungsvorrichtung in Eingriff steht oder in thermischer Verbindung damit ist.

15. Wärmeübertragungsanordnung, die aus mindestens zwei Wärmeübertragungsvorrichtungen nach Anspruch 1 gebildet ist, wobei jede Übertragungsvorrichtung ein gemeinsames Ausstrahlerobjekt aufweist, das separate äußere Sammelflächen und innere Ausstrahlflächen für jede Übertragungsvorrichtung definiert, wobei jede Übertragungsvorrichtung ein gemeinsames Empfängerobjekt aufweist, das separate innere Empfangsflächen und äußere Wärmeabgabeflächen für jede Übertragungsvorrichtung definiert.

**Revendications**

1. Appareil de transfert de chaleur qui comprend

   un objet émetteur qui définit une surface externe d'accumulation et une surface interne de transmission,
   un objet récepteur déplacé de l'objet émetteur, l'objet récepteur définissant une surface interne de réception et une surface externe d'apport de chaleur,
   un conduit thermique qui incorpore, au moins, une paroi latérale connectée entre l'objet émetteur et l'objet récepteur, ladite au moins une paroi latérale couvrant la distance entre l'objet émetteur et l'objet récepteur et enfermant un volume entre les objets émetteur et récepteur, ladite au moins une paroi latérale enfermant la surface interne de transmission de l'objet émetteur et la surface interne de réception de l'objet récepteur,
   dans lequel une surface intérieure d'une paroi latérale du conduit thermique comprend un ou plusieurs réflecteurs thermiques agencés pour diriger le rayonnement thermique de manière préférentielle vers l'objet récepteur et l'objet émetteur, où l'objet récepteur et le conduit thermique sont configurés pour favoriser le transfert de chaleur principalement vers l'objet récepteur.

2. Appareil de transfert de chaleur selon la revendication 1, dans lequel le volume enfermé par la ou les parois latérales du conduit thermique est un environnement à basse pression d'air, à vide partiel ou à vide.

3. Appareil de transfert de chaleur selon la revendication 1, dans lequel le volume enfermé par la ou les parois latérales du conduit thermique contient un gaz inerte ou à faible conductivité thermique.

4. Appareil de transfert de chaleur selon la revendication 1, dans lequel l'au moins un réflecteur thermique ou les réflecteurs thermiques comprennent un métamatériau nanostructuré adapté pour réfléchir de manière préférentielle le rayonnement thermique dans des directions spécifiques.

5. Appareil de transfert de chaleur selon la revendication 1, dans lequel la surface externe d'accumulation de l'objet émetteur est utilisée pour accumuler la chaleur de l'environnement immédiat de l'appareil de transfert de chaleur et la surface externe d'accumulation de l'objet émetteur comprend ou est dotée d'un métamatériau nanostructuré appliqué adapté pour absorber la lumière du soleil et pour empêcher le rayonnement du corps noir de la surface externe d'accumulation.

6. Appareil de transfert de chaleur selon la revendication 1, dans lequel la surface externe d'apport de chaleur de l'objet récepteur est utilisée pour délivrer de la chaleur à l'environnement immédiat de l'appareil de transfert de chaleur et la surface externe d'apport de chaleur de l'objet récepteur comprend ou est dotée d'un métamatériau nanostructuré appliqué qui est adapté pour bloquer l'accumulation de la lumière solaire et favoriser l'émission de rayonnement de corps noir.

7. Appareil de transfert de chaleur selon la revendication 1, dans lequel la surface interne de transmission de l'objet émetteur est utilisée pour émettre un rayonnement thermique de corps noir et une nanostructure, une nanocouche ou un métamatériau est appliqué à la surface interne de transmission de l'objet émetteur pour émettre de préférence un rayonnement thermique dans des bandes de longueurs d'onde spécifiques.

8. Appareil de transfert de chaleur selon la revendication 1, dans lequel la surface interne de réception de l'objet récepteur est utilisée pour absorber le rayonnement thermique émis à partir de la surface interne de transmission de l'objet émetteur.

9. Appareil de transfert de chaleur selon la revendication 8, dans lequel une nanostructure, une nanocouche ou un métamatériau est appliqué à la surface interne de réception de l'objet récepteur pour émettre de préférence un rayonnement thermique dans des bandes de longueurs d'onde spécifiques.

10. Appareil de transfert de chaleur selon la revendication 1, dans lequel un appareil de transfert de chaleur comprend un filtre à l'intérieur du volume enfermé par le conduit thermique, le filtre étant adapté pour réfléchir le rayonnement thermique dans des bandes de longueurs d'onde spécifiques et transmettre le rayonnement thermique dans d'autres bandes de longueurs d'onde.

11. Appareil de transfert de chaleur selon la revendication 10, dans lequel le filtre est formé d'un réflecteur dépendant de la longueur d'onde fourni par un miroir dichromatique, un filtre d'interférence à couche mince et/ou un métamatériau nanostructuré.

12. Appareil de transfert de chaleur selon la revendication 1, dans lequel l'aire de la surface interne de transmission de l'objet émetteur est plus grande que l'aire de la surface interne de réception de l'objet récepteur.

13. Appareil de transfert de chaleur selon la revendication 1 ou la revendication 10, dans lequel un matériau tampon thermique est prévu en contact avec ou en tant que partie de l'un quelconque ou de plusieurs des éléments suivants :

- la surface externe d'accumulation de l'objet émetteur ;
- la surface externe d'apport de chaleur de l'objet récepteur ;
- la surface interne de transmission de l'objet émetteur ;
- la surface interne de réception de l'objet récepteur ;
- la surface interne de la paroi latérale du conduit thermique ;
- le filtre.

14. Ensemble de transfert de chaleur formé à partir d'au moins deux appareils de transfert de chaleur selon la revendication 1, qui comprend un objet récepteur d'un premier appareil de transfert en collaboration ou en communication thermique avec un objet émetteur d'un second appareil de transfert.

15. Ensemble de transfert de chaleur formé à partir d'au moins deux appareils de transfert de chaleur selon la revendication 1, chaque appareil de transfert incorporant un objet émetteur commun qui définit des surfaces séparées, une externe d'accumulation et une interne de transmission, pour chaque appareil de transfert, chaque appareil de transfert incorporant un objet récepteur commun qui définit des surfaces séparées, une interne de réception et une externe d'apport de chaleur, pour chaque appareil de transfert.

EP 3 999 790 B1

FIG 1

FIG 2

EP 3 999 790 B1

FIG 3

FIG 4

FIG 5

101
103
102

(a)

(b)

FIG 6

EP 3 999 790 B1

101

103

102

(b)

FIG 7

(a)

FIG 8

FIG 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4461277 A

**Non-patent literature cited in the description**

- **YANPEI TIAN ; ALOK GHANEKAR ; MATT RICCI ; MIKHAIL HYDE ; OTTO GREGORY ; YI ZHENG.** A review of tunable wavelength selectivity of meta-materials in the field and far field radiative thermal transport. *Materials journal,* 2018, vol. 11, 862
- **YAO ZHAI, YAOGUANG ; SABRINA N. DAVID ; DONGLIANG ZHAO ; RUNNAN LOU ; GANG TAN ; RONGGUI YANG ; XIAOBO YIN.** Scalable-manufactured randomized glass-polymer hybrid metamaterial for daytime radiative cooling. *Science,* 10 March 2017, vol. 355 (6329), 1062-1066
- **AASWATH P. RAMAN ; MARC ABOU ANOMA ; LINXIAO ZHU ; EDEN REPHAELI ; SHANHUI FAN.** Passive radiative cooling below ambient air temperature under direct sunlight. *Nature,* 2014, vol. 515, 540-544
- **QIYANG LU ; SAMUEL HUBERMAN ; HANTAO ZHANG ; QICHEN SONG ; JIAYUE WANG ; GULIN VARDAR ; ADRIAN HUNT ; IRADWIKANARI WALUYO ; GANG CHEN ; BILGE YILDI.** Bidirectional tuning of thermal transport in SrCoOx with electrochemically induced phase transitions. *Nature Materials,* 2020, vol. 19, 655-662

- **GEOFF WEHMEYER ; TOMOHIDE YABUKI ; CHRISTIAN MONACHON ; JUNQIAO WU ; CHRIS DAMES.** Thermal diodes, regulators, and switches: Physical mechanisms and potential applications. *Applied Physics Reviews,* 2017, vol. 4, 041304
- **ALBERT MASSAGUER COLOMER ; EDUARD MASSAGUER ; TONI PUJOL ; MARTI COMAMALA ; LINO MONTORO ; J.R. GONZÁLEZ.** Electrically tunable thermal conductivity in thermoelectric materials: Active and passive control. *Applied Energy,* 15 September 2015, vol. 154, 709-717
- **KAIKAI DU ; QIANG LI ; YANBIAO LYU ; JICHAO DING ; YUE LU ; ZHIYUAN CHENG ; MIN QIU.** Control over emissivity of zero-static-power thermal emitters based on phase changing material GST. *Light: Science & Applications,* 2017, vol. 6, e16194
- **DRAGOMIR NESHEV ; IGOR AHARONOVICH.** Optical metasurfaces: new generation building blocks for multifunctional optics. *Light: Science & Applications,* 2018, vol. 7
- **YANPEI TIAN ; ALOK GHANEKAR ; MATT RICCI ; MIKHAIL HYDE ; OTTO GREGORY ; YI ZHENG.** A Review of Tunable Wavelength Selectivity of Metamaterials in Near-Field and Far-Field Radiative Thermal Transport. *Materials,* 2018, vol. 11, 862